Europäisches Patentamt

European Patent Office

Office européen des brevets

(11) Numéro de publication: **0 268 717**
**A1**

## (12) DEMANDE DE BREVET EUROPEEN

(21) Numéro de dépôt: 86401350.3

(51) Int. Cl.⁴: **H04M 1/66**

(22) Date de dépôt: **20.06.86**

Le titre de l'invention a été modifié (Directives relatives à l'examen pratiqué à l'OEB, A-III, 7.3)

(43) Date de publication de la demande:
**01.06.88 Bulletin 88/22**

(84) Etats contractants désignés:
**BE CH DE GB IT LI**

(71) Demandeur: **C.M.S. Central Multi Services
Chemin de la Porte de Fourqueux
F-78112 Fourqueux(FR)**

(72) Inventeur: **Baudoin, Michel
Chemin de la Porte de Fourqueux
F-78112 Fourqueux(FR)**

(54) **Appareil de contrôle pour poste téléphonique.**

(57) L'invention concerne un appareillage pour le contrôle et la gestion du fonctionnement d'une ligne téléphonique.

Il comporte un dispositif de coupure de ligne (2) en série sur la ligne à surveiller (1), des capteurs de signaux téléphoniques (3-5) en parallèle sur la ligne surveillée, au moins un dispositif de visualisation (7,9), un terminal d'entrée (12) et un circuit de commande (6) recevant des signaux fournis par les capteurs (3-5) et le terminal d'entrée (12) et commandant le dispositif de visualisation (7,9) et le dispositif de coupure de ligne.

Une imprimante (9) permet d'obtenir une liste des appels ou incidents survenus sur la ligne.

FIG.1

## "Appareillage de contrôle du fonctionnement d'une ligne téléphonique".

La présente invention concerne un appareillage destiné au contrôle et à la gestion d'une ligne téléphonique. Dans le cas d'une ligne téléphonique qui peut être utilisée par plusieurs personnes, le titulaire de la ligne peut désirer contrôler et/ou règlementer l'usage de cette ligne par des tierces personnes. On connaît par exemple des dispositifs permettant d'enregistrer les communications faites sur une ligne téléphonique, mais ces appareils ne permettent pas d'enregistrement sélectif, si bien qu'ils enregistrent toutes les communication qui arrivent ou qui partent du poste surveillé et que pour une ligne à fort trafic, la capacité du support d'enregistrement est très vite dépassée et ces appareils d'enregistrement ne sont en fait d'aucune utilité pratique.

Il existe également des dispositifs qui permettent de limiter l'usage d'une ligne téléphonique en ne permettant l'appel que de certaines zones ou de certains numéros mais, cette limitation ne peut être facilement supprimée temporairement pour le titulaire de la ligne par exemple.

Il existe encore des appareillages permettant de noter l'heure, la durée et le numéro appelé pour chaque communication téléphonique demandée à partir d'un poste donné. Ces appareil sont généralement intégrés dans des centraux téléphoniques et leur prix est élevé.

La présente invention a pour objet un appareillage de contrôle du fonctionnement d'une ligne téléphonique qui permet à la fois de contrôler précisément l'utilisation faite de la ligne et de la règlementer en interdisant ou autorisant certains numéros, cette règlementation pouvant être momentanément supprimée.

L'appareillage selon l'invention est notamment remarquable en ce qu'il comporte un dispositif de coupure de ligne en série sur la ligne surveillée, des capteurs de signaux téléphoniques en parallèle sur la ligne à surveiller, au moins un dispositif de visualisation, un terminal d'entrée et un circuit de commande recevant les signaux fournis par les capteurs et le terminal d'entrée et commandant le dispositif de visualisation et le dispositif de coupure de ligne.

Cet appareillage est totalement indépendant du poste téléphonique lui-même et se branche sur la ligne téléphonique à surveiller en amont du poste téléphonique; les capteurs de courant téléphonique fournissent des informations sur l'utilisation de la ligne, informations qui sont mémorisées dans le circuit de commande, le terminal d'entrée permet d'envoyer au circuit de commande des informations sur la règlementation d'usage de la ligne, informations qui sont également mémorisées dans ce circuit de commande et ce dernier agit sur le dispositif de coupure de ligne lors de la composition d'un numéro interdit sur le poste surveillé. Cet appareil permet donc d'effectuer une surveillance de la ligne en aval de son point de branchement, c'est-à-dire des opérations effectuées sur le poste téléphonique. Cet appareil pourrait également être inclus dans un poste ou central téléphonique.

Selon une autre caractéristique l'appareillage de contrôle de fonctionnement d'une ligne téléphonique selon l'invention comporte des détecteurs d'état de la ligne, qui sont également reliés au circuit de commande. Ces détecteurs d'état de la ligne permettent d'effectuer une surveillance en amont du point de branchement, en particulier en ce qui concerne des coupures éventuelles de la ligne ou des branchements non autorisés sur la ligne en dehors du poste téléphonique.

Avantageusement l'appareillage selon l'invention comporte un dispositif de commande d'enregistrement sur un magnétophone, ledit dispositif étant relié au circuit de commande de manière à commander l'enregistrement des communication demandées avec certains ou indicatifs prédéterminés.

Selon un mode de réalisation de l'invention, ce circuit de commande est constitué par un microprocesseur comportant une mémoire, le terminal d'entrée est constitué par un clavier et l'appareillage comporte un dispositif d'affichage et une imprimante.

D'autres caractéristiques et avantages de l'invention ressortiront de la description qui suit et des dessins ci-annexés sur lesquels:

-la Figure 1 est un schéma synoptique d'un mode de réalisation d'un appareil selon l'invention, et

-la Figure 2 est une vue en perspective d'un appareillage conforme à la présente invention.

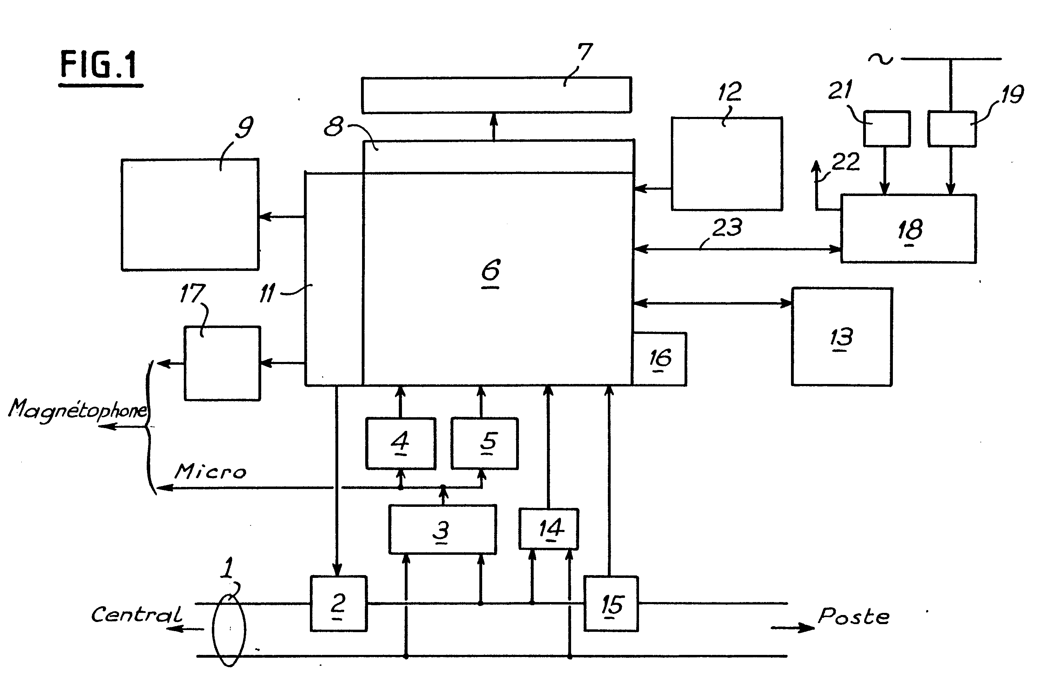

L'appareillage qui est représenté sur le schéma de la figure 1 est destiné à surveiller une ligne téléphonique 1; il est branché sur cette ligne entre le central téléphonique situé à gauche sur la figure et le poste téléphonique d'utilisation situé à droite sur la figure. Cet appareillage comporte essentiellement un dispositif de coupure de ligne 2 branché en série sur un des fils de la ligne, des capteurs de signaux téléphoniques constitués dans l'exemple représenté par un amplificateur différentiel 3 dont les signaux de sortie sont envoyées sur un détecteur de tonalité 4 et un décodeur multifréquence 5. Les signaux fournis par ces détecteurs sont envoyés à un circuit de commande qui peut être avantageusement constitués par un micro-processeur sous forme de circuit intégré de type "monochip" 6 qui commande un premier dispositif d'affichage 7 constitué par exemple par un écran à cristaux liquidespar l'intermédiaire d'un contrôleur d'affichage 8 et un deuxième dispositif d'affichage constitué par une imprimante 9 commandée par un circuit 11 comportant en particulier des amplificateurs de puissance. Un terminal d'entrée constitué par un clavier 12 envoie des information de commande au micro-processeur 6 qui comporte une mémoire vive 13; cette dernière comporte avantageusement une batterie de sauvegarde disposée à l'intérieur du micro-processeur 6; elle pourrait également être constituée par une mémoire non volatile auquel cas il n'y aurait pas besoin de batterie de sauvegarde.

L'appareillage selon l'invention comporte en outre des détecteurs d'état de la ligne constitués par un détecteur de tension 14 branché en parallèle sur la ligne et un détecteur de courant 15 branché en série sur la ligne téléphonique 1.

Le circuit de commande 6 comporte une pendule interne fournissant la date et l'heure et alimentée par une batterie interne du circuit de commande qui peut avantageusement être constituée par la batterie interne de sauvegarde de la mémoire vive 13. Une horloge 16 intégrée au micro-processeur 6 pilote le fonctionnement de ce dernier.

L'appareillage selon l'invention peut également comporter un dispositif de télécommande 1 relié au circuit de puissance 11 et commandant le fonctionnement d'un magnétophone d'enregistrement dont le micro est branché à la sortie de l'amplificateur différentiel de ligne 3.

Un bloc d'alimentation 18 reçoit le courant fournit par un adaptateur 19 branché sur le secteur d'alimentation électrique. Le bloc d'alimentation 18 comporte un dispositif de régulation d'alimentation et alimente une batterie 21 montée en floating et fournit en 22 une alimentation régulée à l'ensemble des circuits de l'appareillage.

Ce bloc d'alimentation comporte également un dispositif de détection de coupure de l'alimentation fournie par l'adaptateur 19 et envoie par la ligne 23 une information de coupure de ligne au micro-processeur 6.

Le micro-processeur 6 comporte une mémoire morte et des interfaces d'entrée-sortie avec les différents dispositifs qui lui sont reliés; la mémoire vive 13 est partagée en une zone de travail et une zone utilisateur; elle peut être externe au micro-processeur ou intégrée dans ce dernier.

Le détecteur de tonalité 4 peut être constitué par un filtre ou un circuit à verrouillage de phase de manière à permettre la détection d'une tonalité en audio-fréquence. Le décodeur 5 est un décodeur réalisé de préférence sous forme de circuit intégré qui réalise un décodage des signaux en impulsions codées. De ce fait, l'appareillage selon l'invention peut fonctionner aussi bien sur les réseaux téléphoniques anciens à multi-fréquences que sur les réseaux récents fonctionnant avec le système de modulation par impulsions codées.

Le dispositif de coupure 2 peut être constitué par un relais ou un circuit à transistor réalisant une coupure de la ligne sous la commande du micro-processeur 6.

L'amplificateur différenteil de ligne 3, le détecteur de tension 14 et le détecteur de courant 15 ainsi qu'éventuellement le décodeur multifréquence 5 peuvent avantageusement être réalisés sous la forme d'un boîtier unique.

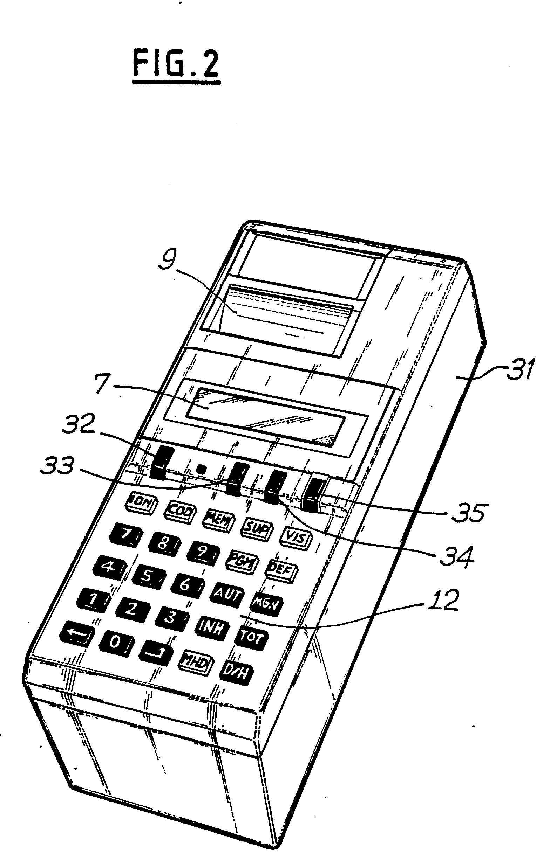

La figure 2 représente en perspective une réalisation pratique de l'appareillage selon l'invention. Il se présente sous la forme d'un boîtier 31 de format de poche qui peut facilement contenir tous les circuits décrits ci-dessus puisqu'ils sont pour la plupart réalisés sous la forme de circuit intégré, seul l'adaptateur secteur 19 étant à l'extérieur de ce boîtier et branché sur ce dernier. Ce boîtier 31 est donc muni de connecteurs permettant le raccordement à l'adaptateur secteur 19, au magnétophone d'enregistrement et à la ligne à surveiller 1 dont un des conducteur doit être coupé, les deux brins étant branchés sur le boîtier 31.

On reconnaît sur ce boîtier l'imprimante 9, l'écran à cristaux liquides 7 et le clavier 12. Ce dernier comporte vingt cinq touches; quatre touches supplémentaires 32 à 35 sont disposées au-dessus du clavier 12.

Avantageusement, une des touches du clavier 12, la touche DEF permet de prendre en compte ou non les appels en amont du branchement; ce choix peut s'accompagner d'un changement de langage pour les indications écrites fournies par l'imprimante 9 et l'écran 7.

La touche MHD permet de mettre l'"heure la pendule interne du micro-processeur 6; la touche IDN permet de composer un code personnel choisi par l'utilisateur. Ce code est obtenu en pressant huit touches de l'ensemble du clavier, c'est-à-dire huit touches sur vingt huit ce qui permet un nombre très important de combinaisons de code. Ce code permet tout d'abord de programmer les numéros de téléphone autorisés et les numéros de téléphone interdits. Il existe un autre code qui est un code composé seulement de chiffres et qui permet à un utilisateur d'utiliser le poste téléphonique en levant les interdictions programmées; il suffit pour celà de composer ce code sur le clavier du poste téléphonique; lorsque le circuit de commande détecte ce code de priorité, il autorise la communication téléphonique sans limitation.

Dans le cas général, lorsque l'appareillage selon l'invention détecte la composition d'un numéro de téléphone sur le poste téléphonique surveillé, il le compare aux numéros autorisés selon le programme, aux numéros interdits selon le programme, et aux numéros pour lesquels on a programmé la commande d'un enregistrement magnétique. Si le micro-processeur reconnait le numéro composé comme étant un numéro autorisé il n'intervient pas, s'il reconnait le numéro composé comme un numéro autorisé mais soumis à enregistrement, il commande l'enregistrement par le magnétophone et si le micro-processeur reconnait le numéro comme étant un numéro interdit, il commande la coupure de la ligne par l'intermédiaire du dispositif de coupure 2 de telle sorte que l'utilisateur ne peut obtenir le numéro demandé.

L'appareillage selon l'invention enregistre tout ce qui se passe en aval c'est-à-dire du côté téléphonique en fait tous les appels ou toutes les tentatives d'appels non autorisés fait à partir de ce poste; grace au détecteur 14 et 15, l'appareillage selon l'invention peut également surveiller ce qui se passe en amont et il enregistre également tous les incidents tels que coupure de lignes, rebranchement de lignes, coupure de l'alimentation, rebranchement de l'alimentation, utilisation de la ligne par piquage sur celle-ci à l'extérieur, etc... L"appareillage selon l'invention peut soit effectuer les deux surveillances amont et aval, grâce à la touche DEF, soit seulement l'une d'entre elles; en particulier dans le cas où l'appareillage selon l'invention est disposé entre un standard téléphonique et un poste téléphonique intérieur, il n'effectue que la surveillance aval de la ligne.

L'écran à cristaux liguide 7 affiche en permanence la date et l'heure; il affiche également les ordres de programmation, ce qui permet de vérifier ces derniers avant de les entrer en mémoire. Lorsque l'appareillage selon l'invention détecte un appel, une indication clignotante apparait sur l'écran 7; si cette appel n'est pas autorisé une indication telle qu'un zéro est affichée; de même s'il s'agit d'une communication autorisée mais soumise à enregistrement, une indication est fournie sur l'écran.

La touche EDN permet d'obtenir sur l'imprimante 9 la liste des évènements enregistrés par l'appareillage selon l'invention. Pour chaque évènement l'heure est indiquée et s'il s'agit d'une communication téléphonique, sa durée en temps ou en nombre d'impulsions est également fournie. De cette manière, on peut réaliser une gestion détaillée de la ligne téléphonique. Deux versions sont possibles, dans la première on indique la durée de la communication et dans la deuxième on indique le nombre de taxes grâce au décodeur multifréquences 5.

On voit donc que l'invention permet à la fois de réaliser une surveillance, un contrôle de l'utilisation et une gestion précise de l'utilisation d'une ligne téléphonique tout en permettant à un utilisateur autorisé connaissant le code de priorité de lever temporairement les interdictions de numéro programmées.

L'utilisation de circuits intégrés permet d'obtenir un équipement de faible dimension qui est discret; à titre d'exemple, les demandeurs on réalisé un appareil qui est contenu dans un boîtier de 7 x 16 x 7,5 cm.

L'utilisation d'une batterie interne permet de sauvegarder les informations contenues dans la mémoire 13 concernant les évènements survenus sur la ligne même en cas de coupure de l'alimentation. L'utilisation d'une batterie 21 en floating permet de faire fonctionner l'appareillage selon l'invention sans alimentation par le réseau.

La description ci-dessus n'a été fournie qu'à titre d'exemple illustratif et nullement limitatif et il est évident que l'on peut y ajouter des modifications ou variantes sans pour autant sortir du cadre de l'invention.

**Revendications**

1°) Appareillage de contrôle de fonctionnement d'une ligne téléphonique (1), caractérisé en ce qu'il comporte un dispositif de coupure de ligne (2) en série sur la ligne à surveiller (1), des capteurs de signaux téléphoniques (3-5) en parallèle sur la ligne surveillée, au moins un dispositif de visualisation (7,9), un terminal d'entrée (12)° et un circuit de commande (6) reçevant des signaux fournis par les capteurs (3-5) et le terminal d'entrée (12) et commandant le dispositif de visualisation (7,9) et le dispositif de coupure de ligne (2).

2°) Appareillage selon la revendication 1, caractérisé en ce qu'il comporte des détecteurs d'état de la ligne (14,15) relié au circuit de commande (6).

3°) Appareillage selon la revendication 1 ou 2, caractérisé en ce qu'il comporte un dispositif de commande d'enregistrement sur un magnétophone (17) relié au circuit de commande (6).

4°) Appareillage selon l'une quelconque des revendications 1 à 3, caractérisé en ce qu'il comporte un dispositif de visualisation et une imprimante (9). (9).

5°) Appareillage selon l'une quelconque des revendications 1 à 4, caractérisé en ce que le terminal d'entrée est constitué par un clavier (12).

6°) Appareillage selon l'une quelconque des revendications 1 à 5, caractérisé en ce que le circuit de commande est constitué par un micro-processeur (6) comportant une mémoire vive (13).

7°) Appareillage selon la revendication 6, caractérisé en ce que le micro-processeur (6) comprte une batterie de sauvegarde de la mémoire vive (13).

8°) Appareillage selon la revendication 6, caractérisé en ce que la mémoire vive (13) est une mémoire non volatile.

9°) Appareillage selon l'une quelconque des revendications 1 à 8, caractérisé en ce qu'il comporte une alimentation (18,19) avec une batterie en floating (21)

10°) Appareillage selon la revendication 9, caractérisé en ce qu'il comporte un détecteur de coupure d'alimentation (18).

**FIG.1**

0 268 717

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | AU-B-3 853 278 (VOGEL) * Page 5, ligne 4 - page 8, ligne 17; figure 1 * | 1,2,5 | H 04 M 1/66 |
| A | GB-A-2 086 187 (STANDARD TELEPHONES AND CABLES LTD) * En entier * | 1,2,5, 6,8 | |
| A | GB-A-2 104 347 (INTERACTION RESOURCES) * Page 1, ligne 27 - page 3, ligne 66; figures * | 1,2,4-6,8 | |

---

DOMAINES TECHNIQUES RECHERCHES (Int. Cl.4)

H 04 M

Le présent rapport de recherche a été établi pour toutes les revendications

| Lieu de la recherche | Date d'achèvement de la recherche | Examinateur |
|---|---|---|
| LA HAYE | 20-02-1987 | KEPPENS P.M.R. |